# EUROPEAN PATENT APPLICATION

(11) **EP 4 813 477 A1**
(43) Date of publication of application: **30.09.2026**
(21) Application number: 26734048.7
(22) Date of filing: 20.01.2026
(51) Int. Cl.: A63B 69/38, A63B 47/00, A63B 71/00

(54) **TENNIS BALL FEEDING DEVICE AND TENNIS BALL MACHINE HAVING SAME**

(30) Priority: 20.01.2025 CN 202520127263 U
(71) Applicant: Shenzhen Enhanced Power Technology Co., Ltd., Shenzhen, Guangdong 518000 (CN)
(72) Inventor: ZHU, Hanqi, Shenzhen, Guangdong 518000 (CN)
(74) Representative: Metida
(86) International application number: PCT/CN2026/073572
(87) International publication number: WO 2026/153558

(57) **Abstract**

A tennis ball feeding device and a tennis ball machine having same are provided. The device includes a ball feeding mechanism and at least one group of folding baffle plates connected to the ball feeding mechanism through a first connector. Each group of folding baffle plates is foldably arranged above the ball feeding mechanism to encircle a position above the ball feeding mechanism after being unfolded, to form a three-dimensional storage region capable of accommodating a plurality of tennis balls, or each group of folding baffle plates are arranged on the ball feeding mechanism in a mutual overlapping manner after being folded. According to the tennis ball feeding device with the folding baffle plates, a relatively large accommodating space can be provided for tennis balls, and the folding baffle plates can also be flatly arranged in the overlapping manner to reduce a space that the device needs to occupy, so that the device is lighter and more compact, simple in overall design, and operated flexibly and easily, effectively increases a utilization rate of a storage space, facilitates carrying and storage, and can meet a plurality of different needs.

## Description

### TECHNICAL FIELD

The present disclosure belongs to the technical field of tennis training devices, and specifically to a tennis ball feeding device and a tennis ball machine having same.

### BACKGROUND

With the popularization of tennis, the application of tennis ball machines has become increasingly widespread. A tennis ball machine can provide users with continuous training and entertainment experiences by automatic ball serving, and has become one of the important tools for training and entertainment.

In actual use of the tennis ball machine, how to effectively store and manage tennis balls, especially how to store a sufficient quantity of tennis balls within a limited space, has always been a problem urgently needing to be solved. The existing tennis ball machine generally employs a fixed structural design, and often accommodates tennis balls by providing a large-capacity storage compartment on the tennis ball machine. This storage compartment is generally open or has a simple partitioned design.

In addition, although some tennis ball machines with more complex designs have improved capacity, users are confronted with perform more complicated operation procedures and potential malfunction issues. Moreover, these tennis ball machines often need to occupy a large space due to their bulky structures. Since the tennis ball machines often need to be moved between different venues, such relocation or storage of the tennis ball machines inevitably brings extra inconvenience to users.

### SUMMARY

To overcome the defects in the prior art, the present disclosure provides a tennis ball feeding device, including a ball feeding mechanism and at least one group of folding baffle plates connected to the ball feeding mechanism through a first connector.

Each group of folding baffle plates is foldably arranged above the ball feeding mechanism to encircle a position above the ball feeding mechanism after being unfolded, to form a three-dimensional storage region capable of accommodating a plurality of tennis balls, or
each group of folding baffle plates are arranged on the ball feeding mechanism in a mutual overlapping manner after being folded.

Optionally, a contour of a portion of the ball feeding mechanism connected to each group of folding baffle plates is in a polygonal shape or a quasi-polygonal shape. Each edge of the polygonal shape is independently connected to one group of folding baffle plates.

Further, any group of the folding baffle plates includes a first baffle plate and a second baffle plate. A first side of the first baffle plate is rotatably connected to the ball feeding mechanism through the first connector. A second side of the first baffle plate is rotatably connected to the second baffle plate through a second connector.

The first side and the second side of the first baffle plate are opposite to each other. A rotation direction of the first connector connected to the same group of folding baffle plates is the same as a rotation direction of the second connector.

Preferably, a light-emitting diode (LED) lighting array is arranged on at least one group of folding baffle plates.

Further, a camera is further mounted on the ball feeding mechanism, and the LED lighting array is arranged on the folding baffle plates that is on the same side as the camera.

Preferably, the ball feeding mechanism is provided with a ball inlet. The ball feeding mechanism includes a turntable. The turntable is rotatably arranged between the folding baffle plates and the ball inlet.

The turntable is provided with a fixing opening for positioning a tennis ball. The fixing opening is communicated with the ball inlet. When the turntable rotates to a position at which the fixing opening is communicated with the ball inlet, a tennis ball located at the fixing opening passes through the ball inlet.

Widths of widest portions of the ball inlet and the fixing opening in any direction are not less than a diameter of a tennis ball.

Further, the turntable is provided with a plurality of protruding partition sections for dividing the turntable into a plurality of zones. Each of the zones is provided with at least one fixing opening.

Preferably, a positioning portion protrudes from a center of the turntable, and a driving member that drives the turntable to rotate is in driving connection with the positioning portion.

Preferably, an observation window is provided on the folding baffle plates.

The present disclosure further provides a tennis ball machine, including the foregoing tennis ball feeding device.

The present disclosure at least has the following beneficial effects:
The tennis ball feeding device provided in the present disclosure allows a user to easily adjust the structure of the device through the folding baffle plates, so that the structure has a simpler mechanical structure that reduces the manufacturing costs and operational complexity. It is convenient for both ball feeding use and daily storage, thus meeting usage requirements in various scenes. This significantly enhances convenience of use in environments requiring frequent movement and mounting, such as tennis training grounds or competition venues.

Further, the tennis ball storage device provided in the present disclosure features the polygonal or quasi-polygonal contour design, so that the folding baffle plates can be connected more tightly and stably when folded and unfolded. By using two baffle plates with the same rotation direction, folding and unfolding operations are simplified, so that a user does not need to additionally determine or adjust a complicated connecting structure, use of the device is simpler and more convenient. In addition, the capacity of a storage space can be adjusted based on a quantity of unfolded baffle plates. The observation window provided on the baffle plates allows the user to directly observe, at a distance, tennis balls stored.

The LED lighting array can increase the visibility of the tennis ball feeding device in a low-light environment. This helps a user to still accurately operate and observe the device even in dimly lit environment, and also provides various display prompt functions to increase the intelligence and interactivity of the device. The cooperation between the LED lighting array and the camera, a user can be photographed with LED light and the camera.

Due to the design of the turntable, a tennis ball can be precisely positioned and conveyed to the ball inlet, thereby mitigating the problem of a ball feeding failure caused by incorrect positioning or inaccurate control, and enhancing the accuracy and reliability of the tennis ball feeding device. Based on this, by dividing the turntable into the plurality of zones, providing the fixing opening in each zone, and controlling the turntable to rotate by the driving member, a plurality of tennis balls can be simultaneously positioned, thereby lowering a requirement for manual adjustment, increasing the automation level of the device, and ensuring that the tennis balls can orderly pass through the ball inlet.

Therefore, the present disclosure provides the tennis ball feeding device and the tennis ball machine having same. By the arrangement of the folding baffle plates on the tennis ball feeding device provided in the present disclosure, a relatively large accommodating space can be provided for tennis balls, and the folding baffle plates can also be flatly arranged in the overlapping manner to reduce a space that the device needs to occupy, so that the device is lighter and more compact, simple in overall design, and operated flexibly and easily, effectively increases a utilization rate of a storage space, facilitates carrying and storage, and can meet a plurality of different needs.

### BRIEF DESCRIPTION OF THE DRAWINGS

For clearer descriptions of the technical solutions according to the embodiments of the present disclosure, the drawings required to be used in the description of the embodiments are briefly introduced below. It is apparent that the drawings in the description below are only some embodiments of the present disclosure, and it is apparent for those skilled in the art that other drawings can be acquired according to the drawings without creative efforts.
FIG. 1 is a schematic diagram of an overall structure of a tennis ball feeding device provided in Embodiment 1 after folding baffle plates are unfolded;
FIG. 2 is a schematic diagram of an overall structure of a tennis ball feeding device after folding baffle plates are folded;
FIG. 3 is a schematic diagram of a structure of a ball feeding mechanism;
FIG. 4 is a top view of a ball feeding mechanism;
FIG. 5 is a schematic diagram of a bottom structure of a ball feeding mechanism; and
FIG. 6 is a bottom view of a ball feeding mechanism.

### Reference numerals:

1: ball feeding mechanism; 2: first baffle plate; 3: second baffle plate; 11: ball inlet; 12: turntable; 13: fixing opening; 14: positioning portion; 15: protruding partition section; 16: camera; 21: first connector; 22: second connector; 23: LED lighting array; and 31: observation hole.

### DETAILED DESCRIPTION OF THE EMBODIMENTS

The technical solutions in embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

Various embodiments of the present disclosure will be described in more detail hereinafter. The present disclosure can have various embodiments, and can make modifications and changes on the embodiments. However, it should be understood that there is no intention to limit the various embodiments of the present disclosure to specific embodiments disclosed herein. Instead, the present disclosure shall be construed to cover all modifications, equivalents, and/or alternatives falling within the spirit and scope of the various embodiments of the present disclosure.

In the following text, the term "include" or "may include" that may be used in various embodiments of the present disclosure indicate the presence of an invented function, operation, or element, and does not limit the addition of one or more functions, operations, or elements. In addition, the terms "include", "have", and their cognates that can be used in the various embodiments of the present disclosure are only intended to represent specific features, digits, steps, operations, elements, components, or combinations of the aforementioned terms, and should not be understood as first excluding the existence of one or more other features, digits, steps, operations, elements, assemblies, or combinations of the aforementioned terms, or the possibility of adding one or more features, digits, steps, operations, elements, assemblies, or combinations of the aforementioned terms.

In the various embodiments of the present disclosure, the expression "or" or "at least one of A and/or B" includes any combination or all combinations of the listed words. For example, the expression "A or B" or "at least one of A and/or B" may include A, may include B, or may include both A and B.

The expressions (such as "first" and "second") used in the various embodiments of the present disclosure may modify various constituent elements in the various embodiments, but may not limit the corresponding constituent elements. For example, the above expressions do not limit the order and/or importance of the elements. The above expressions are only used for the purpose of distinguishing one element from other elements. For example, a first user device and a second user device indicate different user devices, even though both of them are user devices. For example, without departing from the scope of the various embodiments of the present disclosure, a first element can be referred to as a second element. Similarly, the second element can also be referred to as the first element.

It should be noted that in the present disclosure, unless otherwise specified and defined, the terms such as "mount", "connect", and "fix" should be broadly understood, for example, fixed connection, detachable connection, integrated connection, mechanical connection, electrical connection, direct connection, indirect connection through an intermediate medium, or communication between interiors of two elements. A person of ordinary skill in the art may understand specific meanings of the foregoing terms in present disclosure according to specific situations.

In the present disclosure, a person of ordinary skill in the art should understand that terms indicating orientation or positional relationships herein indicate orientations or positional relationships shown in the accompanying drawings and are used only for ease and brevity of illustration and description of the present application, rather than indicating or implying that the mentioned apparatus or element needs to have a particular orientation or needs to be constructed and operated in a particular orientation. Therefore, such terms should not be construed as limiting of the present application.

The terms used in the various embodiments of the present disclosure are merely for the purpose of describing specific embodiments and are not intended to limit the various embodiments of the present disclosure. As used herein, a singular form also includes a plural form, unless the context indicates otherwise. Unless otherwise defined, all terms (including technical and scientific terms) used herein have the same meaning as commonly understood by a person of ordinary skill in the art to which the various embodiments of the present disclosure belong. The terms (such as those limited in commonly used dictionaries) will be interpreted as having the same contextual meaning as in the relevant technical field and will not be interpreted as having idealized or overly formal meanings unless clearly defined in the various embodiments of the present disclosure.

### Embodiment 1

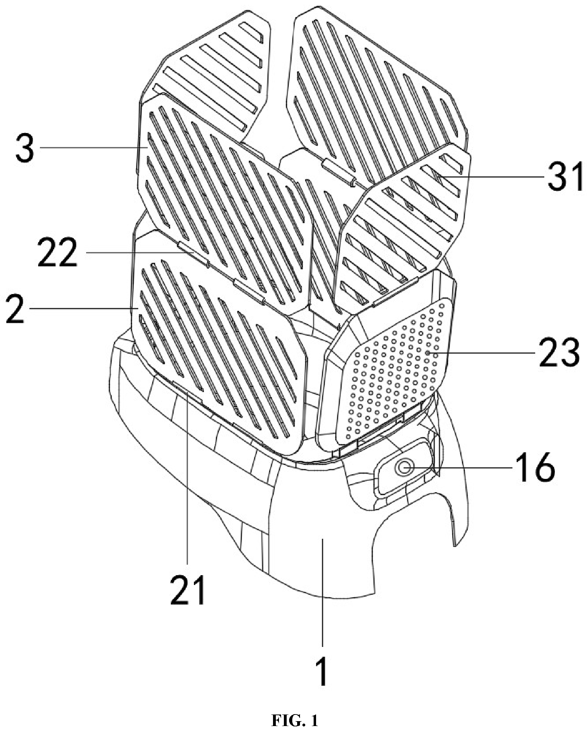

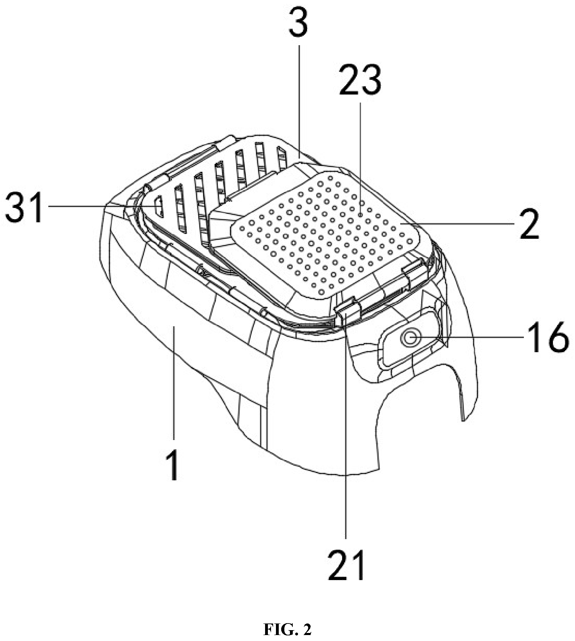

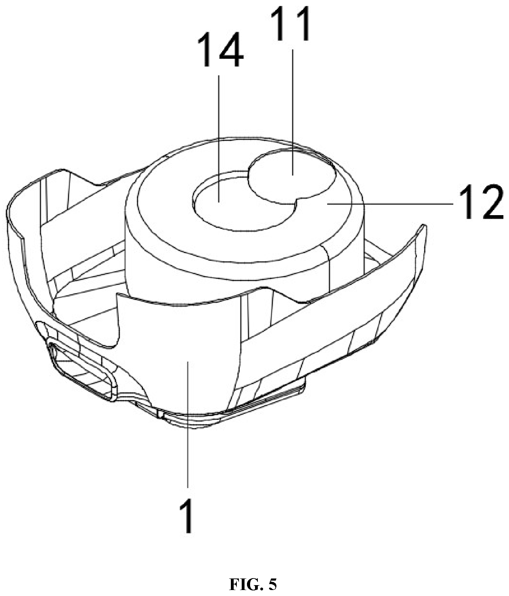

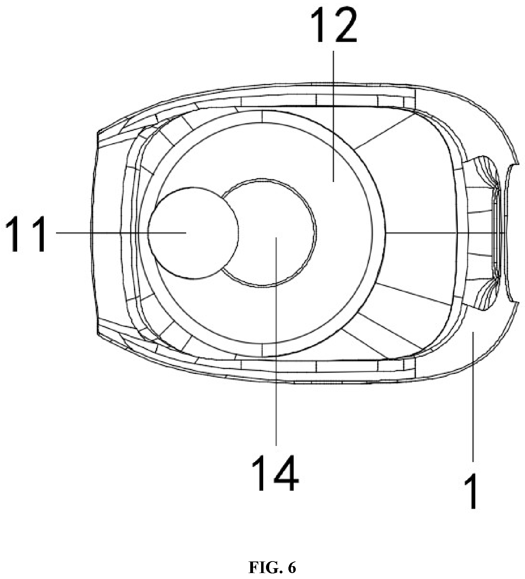

Referring to FIG. 1 to FIG. 6, this embodiment provides a tennis ball feeding device, including a ball feeding mechanism 1 and at least one group of folding baffle plates connected, above the ball feeding mechanism 1, to the ball feeding mechanism 1 through a first connector 21. Each group of folding baffle plates is configured to encircle a position above the ball feeding mechanism 1 after being unfolded, to form a three-dimensional storage region capable of accommodating a plurality of tennis balls, and is further configured to be arranged on the ball feeding mechanism 1 in a mutual overlapping manner after being folded.

Thus, the tennis ball feeding device provided in this embodiment has a simple and flexible usage manner, which can form the three-dimensional storage region through the unfolded folding baffle plates. The baffle plates can place a tennis ball into the storage region and prevent situations such as tennis ball falling, rolling, and missing. When a user does not need to use the tennis ball feeding device or needs to move the tennis ball feeding device, the folding baffle plates can mutually overlap and be flatly placed on the ball feeding mechanism 1, thereby reducing space occupation of the tennis ball feeding device and enhancing portability and storage performance of the device.

In this embodiment, a contour of a portion of the ball feeding mechanism 1 connected to the folding baffle plates is in a polygonal shape or a quasi-polygonal shape. Each edge of the polygonal shape is independently connected to one group of folding baffle plates. It should be noted that compared with a circular shape or another shape, the polygonal shape and the quasi-polygonal shape can organize and arrange a plurality of folding baffle plates more tightly, optimize the utilization rate of a space, and reduce unnecessary gaps. This helps to efficiently store and unfold the folding baffle plates, and ensures that a tennis ball will not be detached from the storage space when the folding baffle plates are unfolded.

By the above setting, when the folding baffle plate connected to each edge is unfolded, each group of folding baffle plates can form the three-dimensional storage region with a storage opening in a top around the ball feeding mechanism 1, so that tennis balls can be safely and neatly stored in the three-dimensional storage region, and non-uniform scattering or stacking of the tennis balls during storage can be avoided.

Further, the contour of the portion of the ball feeding mechanism 1 connected to the folding baffle plates, and angles and shapes of the groups of folding baffle plates can be adjusted according to actual needs, to ensure that the three-dimensional storage region formed can adapt to tennis ball feeding devices with different sizes.

For example, in this embodiment, the overall contour of the portion of the ball feeding mechanism 1 connected to the folding baffle plates are in a quasi-rectangular shape. Each of four edges of the ball feeding mechanism 1 is independently connected to one group of folding baffle plates. When the folding baffle plates connected to the four edges are all unfolded, the four groups of folding baffle plates can encircle the ball feeding mechanism 1 to form a cuboid three-dimensional storage region with a storage opening in a top.

Specifically, any group of the folding baffle plates includes a first baffle plate 2 and a second baffle plate 3. A first side of the first baffle plate 2 is rotatably connected to the ball feeding mechanism 1 through the first connector 21. A second side of the first baffle plate 2 is rotatably connected to the second baffle plate 3 through a second connector 22. The first side and the second side of the first baffle plate 2 are opposite to each other. A rotation direction of the first connector 21 connected to the same group of folding baffle plates is the same as a rotation direction of the second connector 22. In this embodiment, each of the first connector 21 and the second connector 22 can include a hinge.

In addition, when one group of folding baffle plates includes a plurality of baffle plates, a user can change the size of a space of the storage region by adjusting a quantity of baffle plates used. For example, when the user requires a larger storage region, the user can simultaneously unfold the first baffle plate 2 and the second baffle plate 3. In this case, the size of the space of the storage region is equal to a product of heights of the first baffle plate 2 and the second baffle plate 3 relative to the ball feeding mechanism 1 and a contour area of the ball feeding mechanism 1 and the folding baffles. When the user does not require a larger storage region, the user can only unfold the first baffle plate 2, instead of the second baffle plate 3. In this case, the size of the space of the storage region is equal to a product of a height of the first baffle plate 2 relative to the ball feeding mechanism 1 and a contour area of the ball feeding mechanism 1 and the folding baffles.

For example, in another embodiment, at least one edge of the polygonal shape can be connected to one group of folding baffle plates. Any one group of folding baffle plates includes a main baffle plate and a secondary baffle plate. A first side of the main baffle plate is rotatably connected to the ball feeding mechanism 1 through the first connector 21, and a second side of the main baffle plate is rotatably connected to the second baffle plate 3 through the second connector 22. The first and second sides of the main baffle plate are perpendicular to each other, and one side of the secondary baffle plate away from a previous baffle plate can also be sequentially connected to other secondary baffle plates through the second connectors 22. The rotation directions of all the second connectors 22 connected to the same group of folding baffle plates are the same, and the rotation direction of the first connectors 21 is perpendicular to the rotation direction of the second connectors 22. Therefore, when the folding baffle plates connected to the ball feeding mechanism 1 are all unfolded, the groups of folding baffle plates can also encircle the ball feeding mechanism 1 to form the three-dimensional storage region with the storage opening in the top.

Preferably, at least one group of folding baffle plates is provided with an LED lighting array 23. The LED lighting array 23 can provide an adjustable lighting effect, thereby increasing the visibility of the tennis ball feeding device provided in this embodiment when the device is used in nighttime and other environments, also indicate the position of a ball serving machine of a user, and provide functions such as ball feeding indication, point display, and training progress, to enhance the intelligence and interactivity of the device.

Further, the ball feeding mechanism 1 is further provided with a camera 16. The camera 16 can capture sports photos and/or sports videos of a user. The LED lighting array 23 is arranged on the folding baffle plates on the same side as the camera 16. In this embodiment, the LED lighting array 23 is arranged on the first baffle plate 2 of the folding baffle plates on the same side as the camera 16. The LED lighting array 23 helps to enhance a lighting condition within a capture range of the camera 16, and can enhance recognition accuracy and effect of the camera 16 in low-light environments or during indoor use.

Preferably, an observation window is provided on the folding baffle plates, so that when the folding baffle plates are unfolded and form the three-dimensional storage region, it is convenient for a user to observe a quantity of tennis balls stored in the three-dimensional storage region formed by the folding baffle plates from the outer side of the tennis ball feeding device, a stacking height of tennis balls, and other situations.

Further, the observation window may include a plurality of observation holes 31 arranged in a strip shape. The observation holes 31 are uniformly distributed along surfaces of the folding baffle plates, to ensure that a user can clearly observe states of the tennis balls in the three-dimensional storage region formed by the folding baffle plates from different angles. In this embodiment, the observation holes 31 are distributed diagonally and uniformly along the surfaces of the folding baffle plates.

Specifically, the ball feeding mechanism 1 includes a turntable 12. The turntable 12 is rotatably arranged between the folding baffle plates and the ball inlet 11. The turntable 12 is provided with a fixing opening 13 for positioning a tennis ball. The fixing opening 13 can be communicated with the ball inlet 11. The turntable 12 can adjust the position of the fixing opening 13 by rotation, so that when the turntable 12 rotates to a position at which the fixing opening 13 is communicated with the ball inlet 11, a tennis ball located at the fixing opening 13 can pass through the ball inlet 11, thereby ensuring that the tennis balls stored in the storage region can enter a designated position from the ball inlet 11 sequentially and accurately. A positioning portion 14 protrudes from a center of the turntable 12, and a driving member driving the turntable 12 to rotate is in driving connection to the positioning portion 14. Widths of widest portions of the ball inlet 11 and the fixing opening 13 in any direction are not less than a diameter of a tennis ball, to ensure that the tennis ball can pass smoothly through the fixing opening 13 and the ball inlet 11 without being stuck by the ball inlet 11 or the fixing opening 13 due to a small diameter.

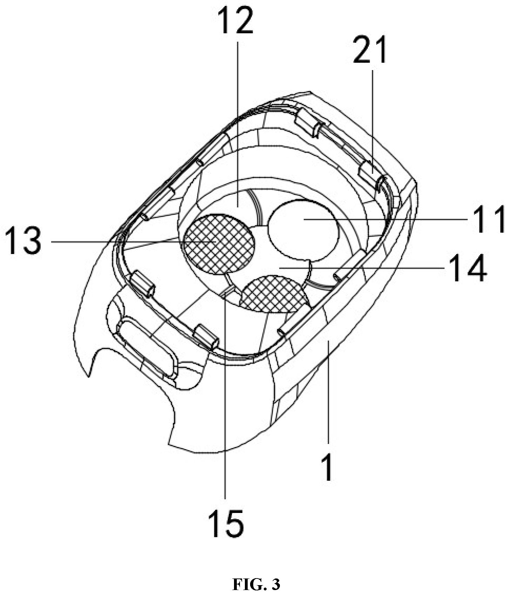

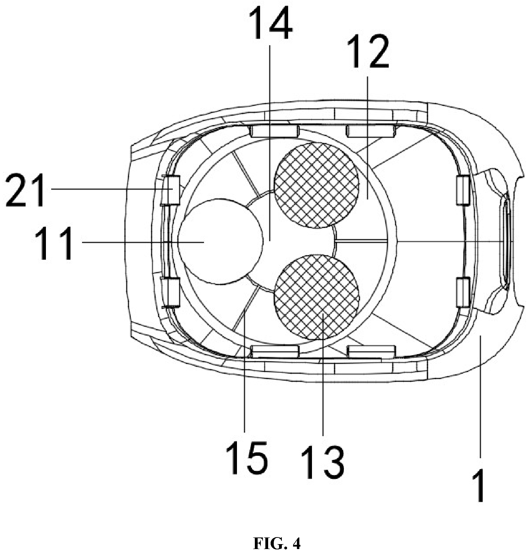

Preferably, the turntable 12 is provided with a plurality of protruding partition sections 15 for dividing the turntable 12 into a plurality of zones. Each of the zones is provided with at least one fixing opening 13. In FIG. 3 and FIG. 4, it is shown that the turntable 12 is provided with three protruding partition sections 15 which cooperate with the positioning portion 14 to uniformly divide the turntable 12 into three fan-shaped zones, and one fixing opening 13 is formed in any fan-shaped zone. However, it should not be understood as a limitation on a quantity of protruding partition sections 15, a shape of each zone, or a quantity of fixing openings 13 in each zone of the turntable 12.

In practical applications, the quantity of protruding partition sections 15, the shape of each zone formed by partitioning by the protruding partition sections 15, and the quantity of fixing openings 13 in each zone can be adjusted according to a specification and a requirement of the ball feeding mechanism 1. For example, more than or less than three protruding partition sections 15 can be arranged in the turntable 12 to form other shapes such as a trapezoid shape by partitioning, and two or more fixing openings 13 can be formed in the zones.

### Embodiment 2

This embodiment provides a tennis ball machine. The tennis ball machine includes the tennis ball feeding device provided in Embodiment 1. Specifically, the tennis ball feeding device is arranged above the overall structure of the tennis ball machine.

In conclusion, the present disclosure provides the tennis ball feeding device and the tennis ball machine having same. By the arrangement of the folding baffle plates on the tennis ball feeding device provided in the present disclosure, a relatively large accommodating space can be provided for tennis balls, and the folding baffle plates can also be flatly arranged in the overlapping manner to reduce a space that the device needs to occupy, so that the device is lighter and more compact, simple in overall design, and operated flexibly and easily, effectively increases a utilization rate of a storage space, facilitates carrying and storage, and can meet a plurality of different needs.
The foregoing descriptions are merely preferred embodiments of the present disclosure, but are not intended to limit present disclosure. Any modification, equivalent replacement, or improvement made within the spirit and principle of the present disclosure shall fall within the protection scope of the present disclosure.

## Claims

1. A tennis ball feeding device, comprising a ball feeding mechanism and at least one group of folding baffle plates connected to the ball feeding mechanism through a first connector, wherein
each group of folding baffle plates is foldably arranged above the ball feeding mechanism to encircle a position above the ball feeding mechanism after being unfolded, to form a three-dimensional storage region capable of accommodating a plurality of tennis balls, or
each group of folding baffle plates are arranged on the ball feeding mechanism in a mutual overlapping manner after being folded.

2. The tennis ball feeding device according to claim 1, wherein a contour of a portion of the ball feeding mechanism connected to each group of folding baffle plates is in a polygonal shape or a quasi-polygonal shape; and each edge of the polygonal shape is independently connected to one group of folding baffle plates.

3. The tennis ball feeding device according to claim 2, wherein any group of the folding baffle plates comprises a first baffle plate and a second baffle plate; a first side of the first baffle plate is rotatably connected to the ball feeding mechanism through the first connector; a second side of the first baffle plate is rotatably connected to the second baffle plate through a second connector;
the first side and the second side of the first baffle plate are opposite to each other; and a rotation direction of the first connector connected to the same group of folding baffle plates is the same as a rotation direction of the second connector.

4. The tennis ball feeding device according to claim 1, wherein a light-emitting diode (LED) lighting array is arranged on at least one group of folding baffle plates.

5. The tennis ball feeding device according to claim 4, wherein a camera is further mounted on the ball feeding mechanism, and the LED lighting array is arranged on the folding baffle plates that is on the same side as the camera.

6. The tennis ball feeding device according to claim 1, wherein the ball feeding mechanism is provided with a ball inlet; the ball feeding mechanism comprises a turntable; the turntable is rotatably arranged between the folding baffle plates and the ball inlet;
the turntable is provided with a fixing opening for positioning a tennis ball; the fixing opening is communicated with the ball inlet; when the turntable rotates to a position at which the fixing opening is communicated with the ball inlet, a tennis ball located at the fixing opening passes through the ball inlet; and
widths of widest portions of the ball inlet and the fixing opening in any direction are not less than a diameter of a tennis ball.

7. The tennis ball feeding device according to claim 6, wherein the turntable is provided with a plurality of protruding partition sections for dividing the turntable into a plurality of zones; and each of the zones is provided with at least one fixing opening.

8. The tennis ball feeding device according to claim 6 or 7, wherein a positioning portion protrudes from a center of the turntable, and a driving member that drives the turntable to rotate is in driving connection with the positioning portion.

9. The tennis ball feeding device according to any one of claims 1 to 3, wherein an observation window is provided on the folding baffle plates.

10. A tennis ball machine, comprising the tennis ball feeding device according to any one of claims 1 to 9.
